# EUROPÄISCHE PATENTANMELDUNG

(11) **EP 4 086 192 A1**
(43) Veröffentlichungstag der Anmeldung: **09.11.2022**
(21) Anmeldenummer: 21000341.4
(22) Anmeldetag: 29.11.2021
(51) Int. Cl.: B65D 88/06, E03B 3/03, E03F 11/00, C02F 3/00, B01D 21/00, B65D 88/00, B65D 90/08, B65D 90/10, B65D 88/76

(54) **TANK, BESONDERS GROSSVOLUMIGER ERDTANK**

(30) Priorität: 03.05.2021 DE 102021002321
(71) Anmelder: Emano Kunststofftechnik GmbH, 17166 Teterow (DE)
(72) Erfinder: Huber, Börger, D- 17166 Teterow (DE)

(57) **Zusammenfassung**

Tank, insbesondere großvolumiger Erdtank für die Bereitstellung von Löschwasser, sowie für den Einsatz als Regenwassersammler und Abwassertank, wobei dieser Tank auch als Mehrkammertank für die Reinigung von Abwasser eingesetzt werden kann.

Der Tank besteht aus einem oder mehreren Mittelsegmenten (12) und Stirnsegmenten (13), die miteinander über Durchzüge (8) in Flanschen (7, 9) verschraubbar sind.

## Beschreibung

Die Erfindung betrifft einen Tank, insbesondere eine großvolumigen Erdtank für die Bereitstellung von Löschwasser, sowie für den Einsatz als Regenwassersammler und Abwassertank.

Dieser Tank kann auch als Mehrkammertank für die Reinigung von Abwasser eingesetzt werden.

Die Bereitstellung von Löschwasser stellt eine zunehmende Herausforderung dar, weil Löschteiche oder andere natürliche Einrichtungen zum einen nicht mehr genügend Wasser führen, zum anderen aber auch zu weit entfernt sein können, um im Ernstfall schnell zur Verfügung zu stehen.

Daher ist es erforderlich, das große Mengen von Löschwasser künstlich bevorratet werden. Für die Bevorratung kommen nur großvolumige Tanks in Frage, die nach Stand der Technik aus einzelnen Segmenten gefertigt werden und i.d.R. im Werk zusammengefügt werden.

Die Segmente müssen aufwändig und großflächig an den Stirnseiten geöffnet werden. Zwischen die Segmente wird eine Dichtung gelegt (optional). Dann werden die Segmente verschraubt und abschließend vollumfänglich verschweißt.

In der DE 10 2007 020 399 A1 wird Tank, insbesondere ein Erdtank beschrieben, der zwei mit Abstand voneinander angeordnete Längskammern aufweist und die Längskammern über zumindest eine Verbindungskammer miteinander verbunden sind. Sowohl die Längskammern als auch die Verbindungskammer sind als Hohlkammern ausgebildet, wobei die entsprechenden Hohlkammern bzw. Hohlräume bevorzugt miteinander in Verbindung stehen. In diesen Hohlräumen der Längskammern und der zumindest einen Verbindungskammer können insbesondere Wasser bzw. Regenwasser, Fäkalien und dergleichen aufgenommen werden. Es liegt im Rahmen der Erfindung, dass die Längskammern parallel zueinander bzw. im Wesentlichen parallel zueinander angeordnet sind. Es liegt weiterhin im Rahmen der Erfindung, dass die Längskammern identisch bzw. im Wesentlichen identisch sind und insbesondere die gleiche Form und/oder die gleiche Größe aufweisen. Die beiden Längskammern haben identische Volumina. Die Längskammern sind im Querschnitt kreisförmig und/oder oval ausgebildet. Vorzugsweise sind beide Längskammern zylinderförmig bzw. im Wesentlichen zylinderförmig ausgeführt. Die Verbindungskammer ist vorzugsweise im Querschnitt oval bzw. im Wesentlichen oval ausgebildet. Die Länge der Längskammern beträgt mehr als das Doppelte und vorzugsweise mehr als das Dreifache der Länge der Verbindungskammer (quer zur Längsachse der Längskammer).

Die EP 96 39 18 A1 offenbart einen Wassertank aus Kunststoff für die Speicherung von Regenwasser, der als Erdtank ausgebildet ist, dessen einteilig hergestellter Tankkörper aus einem zylindrischen Mantel und zwei Böden mit Verstärkungsrippen besteht und der mit einem Dom mit einer Einsteigöffnung und Anschlüssen für ein Zulauf-, ein Überlauf- und ein Entnahmerohr ausgerüstet ist. Die als Klöpperböden ausgebildeten Tankböden weisen jeweils eine in der horizontalen und der vertikalen Mittelebene des liegend eingebauten Tanks angeordnete Versteifungsrippe sowie weitere zu den mittleren Versteifungsrippen symmetrische, in der Grundrissebene der Tankböden elliptisch verlaufende Versteifungsrippen auf. Die Tankböden sind durch das Gitterwerk der sich kreuzenden Versteifungsrippen in dem Erddruck ausgesetzte Belastungsflächen mit annähernd gleichem Flächeninhalt aufgeteilt und die Höhe ist des Domes des Wassertanks entsprechend der Einbautiefe des Tanks stufenlos verstellbar ist.

Die EP 18 94 855 A1 beschreibt einem Wassertank aus Kunststoff, der unter Einsatz von mindestens zwei offenen, identischen Tankteilen in einer Fügeebene zusammen fügbar ist. Die Öffnungsrandstrukturen weisen jeweils mit einem abgeflachten inneren Öffnungsrand, einem zur Fügeebene offenen Dichtungskanal, und einem äußeren, abgeflachten Öffnungsrand auf. Die Öffnungsrandstrukturen liegen in jeden Tankteilen in den inneren und äußeren Öffnungsränder in der Fügeebene und sind als innere und äußere Passflächen jeweils mit einer die Stärke der Tankteilwand und der Dichtungskanalwand mindestens um etwa die Hälfte übersteigenden Weite ausgebildet, derart, dass der Wassertank aus den Tankteilen wahlweise durch dichtungsmittelfreies Schweißfügen der Passflächen oder durch Klammerungsfügen der Öffnungsrandstrukturen mit Dichtungsmitteln zwischen den Hälften teilbar erstellbar ist.

Die EP 21 16 485 A1 offenbart einen Tank (T), der mit einem Sollfassungsvermögen aus mindestens zwei kommunizierend verbundenen, identischen Tankteilen (TT) jeweils aus Kunststoff besteht, deren jeder ein Fassungsvermögen aufweist, das nur ein herstellungs- und transporttechnisch optimierter Teil des Sollfassungsvermögens ist, wobei die Tankteile (TT) mit formschlüssig paarweise ineinander formschlüssig verblockbaren Wandbereichs-Strukturen (S) hergestellt, einzeln transportiert und erst am Einsatzort formschlüssig miteinander verblockt sind.

Der Endverbraucher oder Monteur braucht die beiden Tankteile nur miteinander mittels Wandbereichsstrukturen, insbesondere ineinandergreifende Rippen, zu verblocken und dann miteinander kommunizierend zu verbinden. Die verblockbare Wandbereichs-Struktur lässt sich mit Herstellformen für Kunststoff so gestalten, dass, z.B. mit Wechseleinsätzen im Produktionswerkzeug, unterschiedliche Bauformen für Stehendeinbau oder Liegendeinbau erzeugbar sind. In Kombination ermöglichen die aus den Merkmalen resultierenden logistischen und herstellungstechnischen Vorteile günstige Abgabepreise bei gleichen Gebrauchseigenschaften wie ein einziger großer Tank oder mehrere mit Zwischenabständen isoliert installierte Einzeltanks. Die beiden Tankteile sind durch Rohrverbindungen miteinander kommunizierend verbunden, wobei die Rohrverbindungen in Anschlussdome eingesetzt sind, die diagonal gegenüberliegend in den Wänden, geformt sind.

Die Erfindung EP 22 262 69 A1 betrifft einen Flüssigkeitstank aus Kunststoff, insbesondere Wassertank, wobei der Tank (1) eine Zylinderform aufweist und aus mindestens drei gleichen, blasgeformten Tankmodulen mit einem kreisausschnittsförmigen Querschnitt konzentrisch zu einem Mittelpunkt zusammengesetzt ist. Die Tankmodule werden durch zwei stumpfwinklig zueinander ausgerichtete Innenwände und einen zylindrischen Mantelabschnitt, einen unteren Boden sowie einen oberen Boden und einen Dom mit einem durch einen Deckel verschließbaren Mannloch
gebildet. Die Mantelabschnitte der Tankmodule sind durch horizontale Umfangssicken und vertikale Längssicken versteift, wobei die beiden Innenwände der Tankmodule mit vertikalen Rippen und diesen angepassten vertikalen Sicken für den formschlüssigen Zusammenbau der Tankmodule und zur Versteifung der Innenwände ausgestattet sind.

In der WO 2008 135 053 A1 wird eine Kunststoff-Tank zur Lagerung von Wasser, Fäkalien und dergleichen beschrieben, wobei mindestens zwei mit Abstand angeordnete Längskammern vorgesehen sind. Die Längskammern sind über zumindest ein, vorzugsweise zwei quer zur Längsachse der Längskammern angeordnete Verbindungsstutzen miteinander verbunden.

Die Erfindung gemäß DE19 818 709 A1 bezieht sich auf eine Vorrichtung zur Lagerung und zum Transport von flüssigen Medien, bestehend aus einem großvolumigen Behälter, dessen aus Kunststoff bestehende Wandung zumindest in Teilbereichen aus der Wandung geformte Versteifungsrippen mit muldenartigem Querschnitt aufweist. Um sicherzustellen, dass der Tank im leerem Zustand einfach und vor allem raumsparend transportiert werden kann, besteht der Behälter aus mindestens zwei im Blasform- oder Rotationsgießverfahren hergestellten, eine Innenwand und eine allseitig damit verbundene Außenwand aufweisenden Teilen, wobei die Innenwand weitgehend glatt ausgebildet ist und die Außenwand ausschließlich die durch Kammern zwischen der Innenwand und der Außenwand geformten Versteifungsrippen besitzt.

Der in der DE10 052 324 C2 offenbarte Tank betrifft einen Erdtank, der insbesondere zur Regenwasser- oder Abwasserspeicherung dient. Dieser Erdtank weist einen in einer etwa horizontalen Ebene ringförmig umlaufenden Rohrkörper auf, der eine Ringöffnung umgrenzt. Da das Erdreich auch die einen inneren Freiraum umgrenzende Ringöffnung ausfüllt und da der Erdtank sowohl an der Außenseite seines Rohrkörpers als auch im zentralen Bereich der Ringöffnung durch das umliegende Erdreich abgestützt wird, sind zusätzlich Stützpfeiler oder dergleichen Abstützungen im Tankinneren nicht erforderlich. Der Rohrkörper weist einen runden oder gerundeten Querschnitt auf und besteht aus mehreren modulartig zusammengesetzten Modulabschnitten. Die Modulabschnitte weisen am Querschnittsumfang umlaufende Versteifungssicken und sind durch abgedichtete Steckanschlüsse miteinander verbunden sind.

Die nach Stand der Technik beschriebenen Tanks für große Fassungsvermögen werden aus einzelnen Segmenten gefertigt und i.d.R. im Werk zusammengefügt werden. Die Segmente müssen aufwändig und großflächig an den Stirnseiten geöffnet werden und somit fehlt diesen Segmenten die nötige Stabilität für den unterirdischen Einbau. Zwischen die Segmente wird eine Dichtung gelegt (optional). Dann werden die Segmente verklammert oder abschließend vollumfänglich verschweißt.

Die Segmente sind nur als offenen Halbschalen, die zusammengeschweißt oder zusammengeklammert werden. Damit fehlt diesen Tanks die nötige Stabilität für große Fassungsvermögen, wie sie für Löschwassertanks erforderlich sind.

Des Weiteren werden im Stand der Technik Wassertanks mit einem großen Fassungsvermögen beschrieben, die aus einzelnen Tanks bestehen, bei denen Rippen und Sicke auf der Außenhaut ausgebildet sind, die beim Zusammenfügen ineinanderpassen und so die einzelnen Tanks zu einem Tank mit großem Fassungsvermögen montiert werden können.

Auch bei diesen Lösungen ist die Stabilität der Tank bei großem Fassungsvermögen nicht gegeben, da die geklemmten Sicken und Rippen bei zu hoher Belastung auseinanderreißen können.

Diese technischen Lösungen sind sehr aufwändig und teuer und an den Tanks gibt es kritische Stellen in Form von Schweißnähten oder Klammerverbunde. Da die Tanks mit einem großen Fassungsvermögen aus dem Stand der Technik bereits vor dem Transport zu den Baustellen montiert oder verschweißt werden, ist deren Fassungsvermögen durch die Bedingungen des Transportes auf dem Land- oder Schienenweg in den Abmessungen begrenzt.

Insbesondere Tanks mit einem großen Fassungsvermögen für die Bereitstellung von Löschwasser stellt eine zunehmende Herausforderung dar, weil Löschteiche oder andere natürliche Einrichtungen zum einen nicht mehr genügend Wasser führen und zum anderen aber auch zu weit entfernt sein können, um im Ernstfall schnell zur Verfügung zu stehen. Daher ist es erforderlich, das große Mengen von Löschwasser künstlich bevorratet werden. Für die Bevorratung von Wasser, insbesondere von Wasser für Löschzwecke kommen nur großvolumige Tanks in Frage,

Aufgabe der Erfindung ist es einen Tank mit einem großen Fassungsvermögen für Flüssigkeiten, insbesondere Wasser zu entwickeln, dessen Fassungsvermögen variabel gestaltet, der als Löschwassertank, Regenwassersammler oder als Abwassertank eingesetzt werden oder auch als Mehrkammersystem zur Reinigung von Abwässern dienen kann und der an keine Tranportbedingungen des Land- und Schienentransport gebunden ist.

Die Aufgabe der Erfindung wird durch einen Tank, insbesondere durch einen Tank mit einem großen Fassungsvermögen gelöst, der aus einem oder mehreren Mittelsegmenten 12, bestehend aus einem mit Sicken 11 und Rippen 10 versehenen Mantel 14 und Seitenwänden 15 und an den Seitenwänden 15 angeordnete Stirnsegmente 13, die aus einem linken und rechten Stirnteil 5,6 bestehen, wobei das linke 5 und rechte Stirnteil 6 aus einem viertelkreisförmigem Mantel 16 mit Sicke 11 und Rippen 10 sowie aus einer Grundplatte 17 und einer Stirnplatte 18 bestehen und wobei die Seitenwänden 15 der Mittelsegmente 12,die Grundplatten 17 und die Stirnplatten 18 mit umlaufenden Flanschen 7, 9 mit darin angeordneten, zur wasserdichten Verschraubung der Flansche vorgesehenen Durchzüge 8 versehen sind. Die Seitenwände 15 der Mittelsegmente 12 weisen an der tiefsten und obersten nahe der Innenfläche des Mantels 14 der Mittelsegmente 12 gelegenen Stelle zwei oder mehrere zur Aufnahme von Verbindungsrohren 3 angeordnete Bohrungen 19 mit einer umlaufenden, zur Aufnahme von Gummilippendichtringe 2, versehenen Vertiefung 20 auf. Korrespondierend zu diesen Bohrungen 19 sind in den Stirnplatten 18 der Stirnteile 5 und 6 der Stirnsegmente 13 Bohrungen19 mit einer umlaufenden, die Gummilippendichtringe 2 aufnehmenden Vertiefung 20 zur Aufnahme der Verbindungsrohre 3 angeordnet.

Die Mittelsegmente 12 sind mit einem Domschacht 1 mit Schiebedom 21 mit einem Mannloch 22 und die Stirnsegmente 13 mit jeweils einer Kontrollöffnung 4 mit Verlängerungsrohr 25, Gummilippendichtringen 2 und Deckel 26 versehen.

Die Mittelsegmente 12 und die Stirnteile 5,6 bestehen aus einem Kunststoff, insbesondere aus einem thermoplastischen Kunststoff und werden durch ein Kunststoffformgebungsverfahren, wie Rotationssintern oder Blasformen gefertigt. Zur Montage des Tanks werden wenigsten zwei Mittelsegmente 12 aneinandergefügt und mittels Schraubverbindungen 23 durch die Durchzüge 8 in den Flanschen 7,9 verschraubt. Ein oder mehrere Mittelsegmente 12, versehen mit den Verbindungsrohren 3 und auf den Verbindungsrohren 3 angebrachte Gummilippendichtringe 2, werden aneinandergefügt und miteinander durch die in den Flanschen 7 des Mantels 14 der Mittelsegmente 12 angeordneten Durchzüge 8 verschraubt, wobei die Verbindungsrohre 3 mit den Gummilippendichtringen 2 in die Bohrungen 19 geschoben und die Gummidichtlippenringe 2 durch das Aneinanderfügen der Mittelsegmente 12 in die Vertiefungen 20 gepresst werden und so eine Dichtwirkung zwischen den einzelnen Mittelsegmenten 12 erzeugen.

An dieses komplettierte, aus einem oder mehreren Mittelsegmente 12 bestehende Tankmittelstück werden die zu Stirnsegmente 13 miteinander verbundenen linken 5 und rechten Stirnteile 6 an dieses Tankmittelstück gefügt, wobei ebenfalls die mit Gummilippendichtringen 2 versehenen Verbindungsrohre 3 in die korrespondierenden Bohrungen 19 des Tankmittelstücks 12 und der miteinander verbundenen Stirnsegmente 13 geschoben und durch die in den Flanschen 7,9 angeordneten Durchzüge 8 verschraubt werden.

In einer Auslegung der Erfindung werden die untersten Bohrungen 19 der Seitenwände 15 sowie die korrespondieren Bohrungen 19 der Stirnplatten 18 des linken 5 und rechten Stirnteils 6 annähernd in die Mitte der Seitenwand 15 und der Stirnplatten 18 angeordnet, um so einen Überlauf für einen Mehrkammerreinigungstank zu schaffen.

In einer weiteren Auslegung der Erfindung können ein oder mehrere Tanks über eine, am Domschacht 1 angeordnete Aufnahme 24 mit einer Vertiefung 20 und einem Verbindungsrohr 3 mit Gummilippendichtringen 2 sowie über eine mittig gelegenen Aufnahme 24 mit einer Vertiefung 20 und einem Verbindungsrohr 3 mit Gummilippendichtringen 2 am Fuß des Mantels 14 des Mittelsegmentes 12 miteinander verbunden sein.

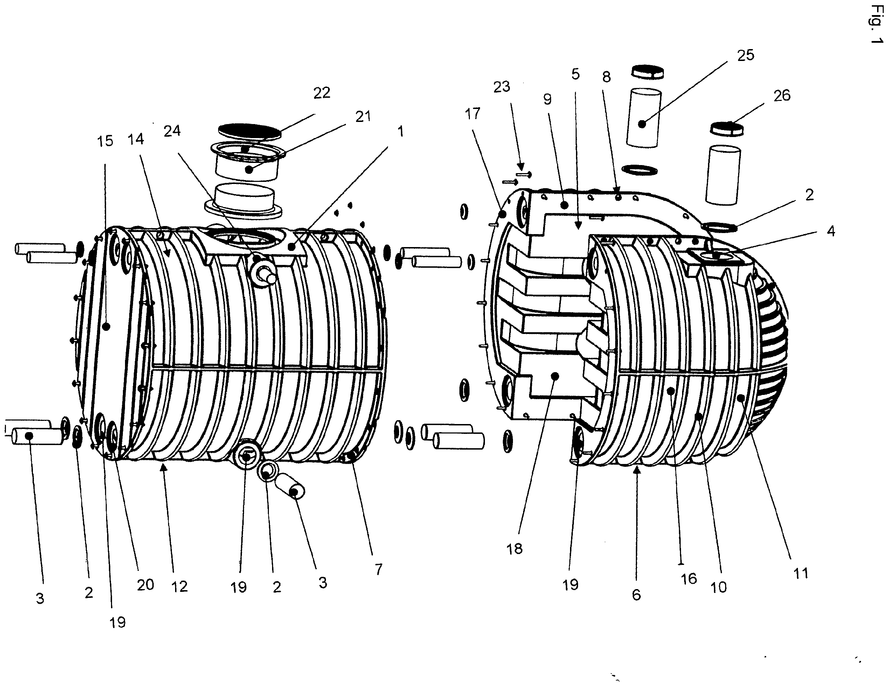

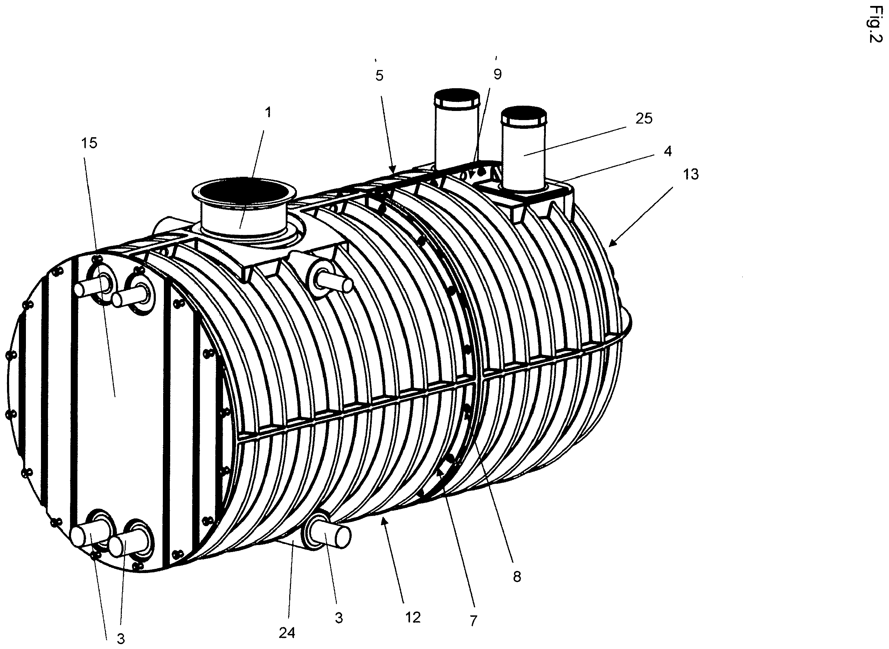

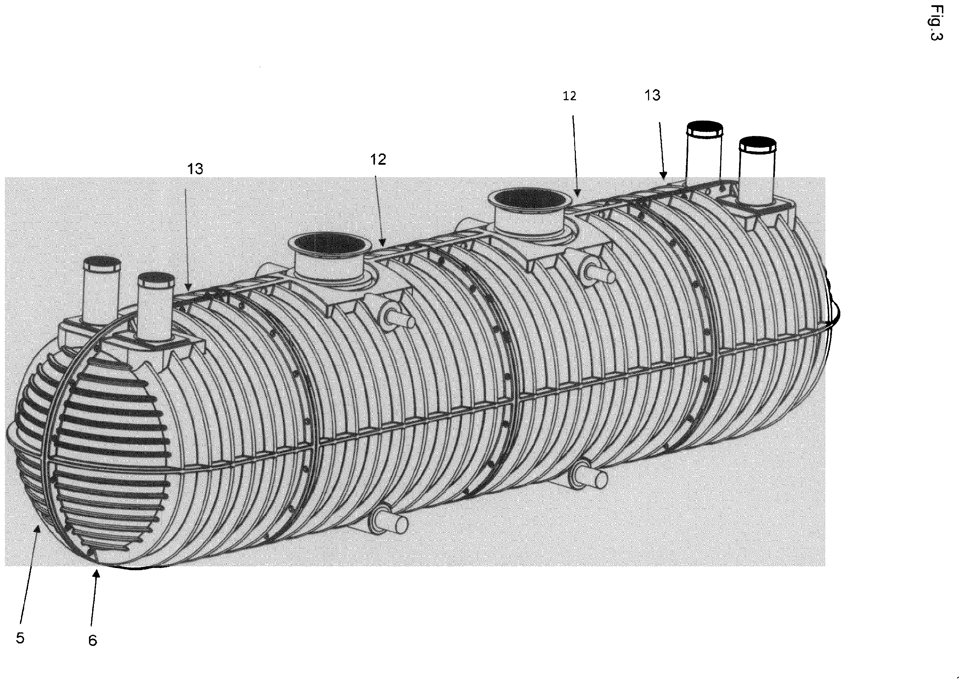

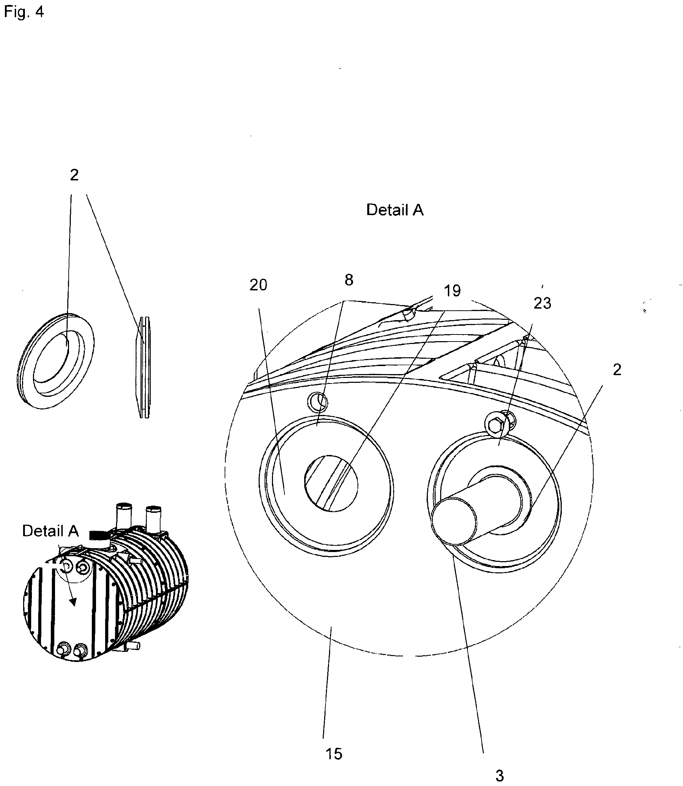

Die Fig. 1 stellt eine schematische Draufsicht auf die Explosivdarstellung des Tanks dar und Fig. 2 zeigt eine schematische Explosivdarstellung eines Mittelsegmente 2 mit den an den Seitenwände (15) des Mittelsegmentes 12 angeordneten Stirnsegmenten 13, die Fig 3 einen komplett verschraubten Tank mit 2 Mittelstücken und den Stirnelementen 13 darstellt und die Fig. 4 zeigt eine schematische Detailzeichnung A der Seitenwand 15 und den Gummilippendichtring 2 , wobei
- 1: Domschacht mit Schiebedom und Mannloch
- 2: Gummilippendichtring
- 3: Verbindungsrohr
- 4: Kontrollöffnungen der Stirnteile 5,6
- 5: linkes Stirnteil
- 6: rechtes Stirnteil
- 7: Flansch an den Seitenwänden 15 des Mittelsegmente 12
- 8: Durchzug in den Flanschen 7,9
- 9: umlaufender Flansch der Stirnsegmente
- 10: Rippe
- 11: Sicke
- 12: Mittelsegment
- 13: Stirnsegment
- 14: Mantel des Mittelsegmentes 12
- 15: Seitenwände des Mittelteils 12
- 16: Mantel der Stirnteile 5,6
- 17: Grundplatte der Stirnteile 5,6 mit Flansch 9
- 18: Stirnplatte der Stirnteile 5,6
- 19: Bohrungen für Verbindungsrohre 3
- 20: Vertiefung
- 21: Schiebedom
- 22: Mannloch
- 23: Schraubverbindung
- 24: Aufnahme
- 25: Verlängerungsrohr
- 26: Deckel
bedeuten.

Die Erfindung wird anhand eines Beispiels näher erläutert.

Das Mittelsegment 12, bestehend aus dem Mantel 14 mit dem Domschacht 1 und den Seitenwänden 15 mit den Flanschen 7 und den in den Seitenwänden 15 angeordneten Bohrungen 19 zur Aufnahme der Verbindungsrohre 3, werden aus Polyethylen im Rotationssinterverfahren hergestellt. Ebenso werden die Stirnteile 5 und 6 mit Ihren Grundplatten 17 und Stirnplatten 18 mit den Bohrungen 19 zur Aufnahme der Verbindungsrohr 3 und an den Grundplatten 17 und Stirnplatten 18 angeordnete umlaufende Flansche 9 aus Polyethylen im Rotationssinterverfahren gefertigt. In die Flansche 7 und 9 werden beim Rotationssintern auch die Durchzüge 8 und die Vertiefungen 20 zur Aufnahme der Gummilippendichtringe 2 gleichzeitig mit eingearbeitet.

In Abhängigkeit des Fassungsvermögen der Tanks werden eine oder mehrere Mittelsegment 12 und paarweise die linken 5 und rechten Stirnteile 6 zur Montage auf der Baustelle auf dem Land- oder Schienenweg transportiert und dort montiert, wobei die Gummilippendichtringe 2 auf die Verbindungsrohr angeordnet, die linken 5 und rechten Stirnteile 6 zur den Stirnsegmenten 13 durch Verschraubungen der Flansche 9 über die Durchzüge 8 montiert, die Verbindungsrohre 3 mit den Gummilippendichtringe 2 in die Bohrungen19 mit den Vertiefungen 20 zur Aufnahme der Gummilippendichtringe 2 verbracht und die Stirnsegmente 13 mit den Mittelsegmenten 12 durch Verschraubungen der Flansche 7 und 9 über die Durchzüge 8 montiert werden.

Mit dieser Erfindung können die Tanks an die Anforderungen des Fassungsvermögens an Löschwasser angepasst und durch Wahl der Anzahl der Mittelsegment 12 variiert werden. Durch das Vorhandensein der Seitenwände 15 der Mittelsegment 12 und der Stirnplatten 18 und der Grundplatten 17 der Stirnteile 5,6 ist die Stabilität für große und größte Fassungsvermögen gewährleistet.

## Patentansprüche

1. Tank mit einem großen Fassungsvermögen, bestehend aus einem oder mehreren Mittelsegmenten (12) mit an den Mittelsegmenten (12) angeordneten Stirnsegmenten (13), **dadurch gekennzeichnet, dass**
• die Mittelsegmente (12) aus einem mit Sicken (11) und Rippen (10) versehenen Mantel (14) und Seitenwänden (15) bestehen und an den Seitenwänden (15) Stirnsegmente (13) angeordnet und
• die Stirnsegmente (13) als eines linken (5) und rechtes Stirnteil (6) ausgebildet sind,
• die linken (5) und rechten Stirnteil (6) je aus einem viertelkreisförmigen Mantel (16) mit Sicken (11) und Rippen (10) sowie aus einer Grundplatte (17) und einer Stirnplatte (18) bestehen
• die Seitenwänden (15) der Mittelsegmente (12), die Grundplatten (17) und die Stirnplatten (18) mit umlaufenden Flanschen (7, 9) mit darin einrotierten, zur wasserdichten Verschraubung der Flansche vorgesehene, Duchzüge (8) versehen
und die
• die Mittelsegmente (12) untereinander und mit den Stirnsegmenten (13) durch zwei oder mehrere, in den Seitenflächen (15) der Mittelsegmente (12) und in den Stirnflächen (18) der linken (5) und rechten Stirnteile (6) an der tiefsten und obersten Stelle nahe der Innenfläche der Mäntel (14, 16) gelegenen Stelle angeordnete, Bohrungen (19) mit Vertiefungen (20) und durch in den Bohrungen (19) angeordneten und über die Gummilippendichtringe (2) abgedichteten Verbindungsrohren (3) verbunden sind.

2. Tank nach Anspruch 1, **dadurch gekennzeichnet, dass** die zwei oder mehrere, in den Seitenflächen (15) an der tiefsten, nahe der Innenfläche des Mantels (14) der Mittelsegmente (12) und der Stirnflächen (18) der linken (5) und rechten Stirnteile (6) gelegenen Stelle, angeordneten Bohrungen (19) annähernd in der Mitte der Seitenflächen (15 und 18) angeordnet sind.

3. Tank nach Anspruch 1 bis 2, **dadurch gekennzeichnet, dass** eine oder mehrere Tanks über eine, am Domschacht (1) angeordnete Aufnahme (24) mit einer Vertiefung (20) und einem Verbindungsrohr (3) mit Gummilippendichtringen (2) sowie über eine im Mantel (14) an der tiefsten Stelle und mittig des Tanks gelegenen Aufnahme (24) mit einer Vertiefung (20) und einem Verbindungsrohr (3) mit Gummilippendichtringen (2) am Fuß des Mantels (14) des Mittelsegmente (12) verbunden sind.

4. Tank nach Anspruch 1, **dadurch gekennzeichnet, dass** wenigstens ein Mittelsegmente (12) einen Domschacht (1) mit Verschiebedom (21) und Mannloch (22) aufweist.

5. Tank nach Anspruch 1, **dadurch gekennzeichnet, dass** das linke (5) und rechte Stirnteil (6) je eine Kontrollöffnung (4) mit Verlängerungsrohr (25), Gummilippendichtring (2) und einen Deckel (26) aufweisen.

6. Tank nach Anspruch 1 bis 3, **dadurch gekennzeichnet, dass** die Mittelsegmente (12), die Stirnsegmente (13), bestehend aus einem linken (5) und rechten Stirnteil (6), aus Kunststoff bestehen.

7. Tank nach Anspruch 4, **dadurch gekennzeichnet, dass** die Mittelsegmente (12) und die Stirnsegmente (13) aus thermoplastischem Kunststoff bestehen.

8. Tank nach Anspruch 1 bis 5, **dadurch gekennzeichnet, dass** die Mittelsegmente (12) und die Stirnsegmente (13) durch ein Kunststoffformgebungsverfahren herstellbar ausbildet sind.

9. Tank nach Anspruch 1 bis 6 **dadurch gekennzeichnet, dass** die Mittelsegmente (12) und linken (5) und die rechten Stirnteile (6) durch das Rotationsintern oder Blasformen von Kunststoff herstellbar ausgebildet sind.

10. Tank nach Anspruch 1 bis 3, **dadurch gekennzeichnet, dass** die Mittelsegmente (12), die linken (5) und rechten Stirnteile (6) mit den in den Flanschen (7, 9) angeordneten Durchzüge (8) wasserdicht verschraubbar ausgebildet sind.

11. Tank nach Anspruch 1 bis 3 und 7, **dadurch gekennzeichnet, dass** die Mittelsegmente (12), die linken (5) und rechten Stirnteile (6) dem Transport auf Land- und Schienenweg tranportabel und am Bestimmungsort montierbar ausgestaltet sind.
